Europäisches Patentamt

European Patent Office

Office européen des brevets

(19)

(11) Numéro de publication : **0 052 551**
**B1**

(12) **FASCICULE DE BREVET EUROPÉEN**

(45) Date de publication du fascicule du brevet :
13.06.84

(51) Int. Cl.³ : **G 01 N 21/43**

(21) Numéro de dépôt : **81401746.3**

(22) Date de dépôt : **30.10.81**

(54) **Réfractomètre utilisant la méthode de l'angle limite.**

(30) Priorité : **14.11.80 FR 8024244**

(43) Date de publication de la demande :
**26.05.82 Bulletin 82/21**

(45) Mention de la délivrance du brevet :
**13.06.84 Bulletin 84/24**

(84) Etats contractants désignés :
**AT BE CH DE FR GB IT LI LU NL SE**

(56) Documents cités :
**FR-A- 1 538 601**
**FR-A- 2 094 486**
**US-A- 2 807 976**
**TAPPI, vol. 58, no. 6, juin 1975 NEW YORK (US) C.A.**
**VOSSBERG: "Scanning refractometer for in-line den-**
**sity measurement", pages 82-84**

(73) Titulaire : **SOCIETE D'OPTIQUE, PRECISION ELEC-
TRONIQUE ET MECANIQUE - SOPELEM**
**102 rue Chaptal**
**F-92300 Levallois-Perret (FR)**

(72) Inventeur : **Grandjacques, Benoit**
**5 Résidence Dulac Impasse Dulac**
**F-94700 Maisons-Alfort (FR)**
Inventeur : **Moirez, Jacques**
**8 rue Emile Deslandre**
**F-75013 Paris (FR)**
Inventeur : **Saint-Sevin, Michel**
**1 bis rue des Trois Soeurs**
**F-93220 Gagny (FR)**
Inventeur : **Blot, Michel**
**19 rue Jean-Jaurès La Norville**
**F-91290 Arpajon (FR)**
Inventeur : **Baluteau, Jean-Michel**
**77 Allée de Chartres**
**F-93190 Livry-Gargan (FR)**

(74) Mandataire : **Dupuy, Louis et al**
**CREUSOT-LOIRE 15 rue Pasquier**
**F-75383 Paris Cedex 8 (FR)**

EP 0 052 551 B1

## Description

L'invention concerne un réfractomètre utilisant la méthode de l'angle limite.

On utilise depuis longtemps, pour la mesure de l'indice de réfraction d'un milieu, en particulier d'un milieu liquide, des réfractomètres utilisant la méthode de l'angle limite : on met au contact du milieu dont on veut mesurer l'indice un prisme d'indice connu et on éclaire la surface de séparation de ces deux milieux dans le but de déterminer l'angle minimum d'incidence pour lequel la réflexion est totale, c'est-à-dire l'angle limite.

Pour déterminer l'angle limite, on peut par exemple éclairer la surface séparant les deux milieux sous toutes les incidences à la fois et déterminer, par exemple en déplaçant une petite cellule devant le faisceau réfléchi, l'angle d'incidence pour lequel la quantité de lumière reçue par la cellule varie rapidement. On peut aussi utiliser une grosse cellule recevant tout le faisceau réfléchi à la fois et déterminer, sur l'image reçue par cette cellule la position de la séparatrice.

On peut aussi, au lieu d'éclairer la surface séparant les deux milieux sous toutes les incidences à la fois, sélectionner un petit pinceau correspondant à une incidence et faire varier la position de ce pinceau. Ce pinceau peut être sélectionné au moyen d'une fente mobile placée dans la pupille de l'objectif. Une cellule fixe de dimensions suffisantes pour être atteinte successivement par chacun des faisceaux réfléchis détermine la position de la fente pour laquelle l'éclairement de la cellule varie rapidement.

Cependant, ces modes de réalisation présentent certains inconvénients.

En particulier, puisque la lampe doit éclairer, soit sous toutes les incidences à la fois, soit une fente mobile dans un faisceau, il est nécessaire de choisir une lampe suffisamment puissante, donc de durée de vie relativement limitée.

En outre, les deux modes de réalisation décrits précédemment supposent une position bien précise de la source lumineuse et une répartition d'éclairement homogène en direction. Or, si l'on est obligé de changer de lampe relativement souvent, on aura du mal à placer la nouvelle lampe dans la même position précise que la première.

D'autre part, le déplacement de la cellule ou de la fente est coûteux et entraîne des imprécisions.

Dans le mode de réalisation où l'on éclaire sous toutes les incidences à la fois, on a en outre une forte diffusion donc une présence de lumière parasite.

Il en découle que les modes de réalisation connus jusqu'à présent sont relativement coûteux et imprécis et l'invention va tenter de remédier à ces inconvénients.

L'invention concerne un réfractomètre destiné à la mesure de l'indice de réfraction d'un milieu, utilisant la méthode de l'angle limite de réflexion totale, comprenant un prisme de référence, d'indice de réfraction connu, pouvant être mis en contact avec le milieu à étudier, une source lumineuse, un objectif de focalisation sur le prisme des rayons lumineux issus de la source, une cellule de mesure photoélectrique située à la sortie du prisme et un dispositif d'interprétation des signaux reçus par la cellule, la source éclairant une fente-source. Ce type de réfractomètre est connu par le brevet US-A-2 807 976.

Selon l'invention, cette fente-source a pour image par rapport à un système optique l'une des fentes d'une grille fixe perpendiculaire à l'axe optique et percée de fentes parallèles entre elles régulièrement espacées correspondant chacune à un angle d'incidence du faisceau optique sur le prisme ; des moyens sont prévus pour que l'image de la fente-source sur la grille puisse être successivement chacune des fentes de la grille ; une pupille faisant partie du système optique et située dans le plan image de la source, est conjuguée avec la face de sortie du prisme et reste immobile lors du déplacement de l'image de la fente-source sur la grille.

Dans un mode de réalisation de l'invention, la fente-source est fixe et le faisceau optique tombant sur la grille est déplacé parallèlement à lui-même au moyen d'un rhomboèdre tournant autour d'un axe parallèle à l'axe optique.

Selon une caractéristique additionnelle de l'invention, ledit système optique est constitué de deux lentilles, la première constituant la pupille et étant placée au foyer de la deuxième.

Selon une autre caractéristique additionnelle de l'invention, la source est constituée par une diode électroluminescente, jaune de préférence.

De préférence, on placera une fibre optique entre la sortie du prisme et la cellule de mesure, la section de cette fibre optique pouvant diminuer entre la face de sortie du prisme et la cellule de mesure.

Selon un mode particulier de réalisation de l'invention, le dispositif d'interprétation des signaux reçus par la cellule est constitué d'un calculateur numérique.

L'invention va maintenant être décrite avec plus de détails, en se référant plus particulièrement à un mode particulier de réalisation de l'invention, représenté sur les figures 1 à 3.

La figure 1 représente le schéma optique d'un réfractomètre selon l'invention.

La figure 2 représente le schéma électronique du réfractomètre de la figure 1.

La figure 3 représente la courbe formée par les signaux reçus par la cellule.

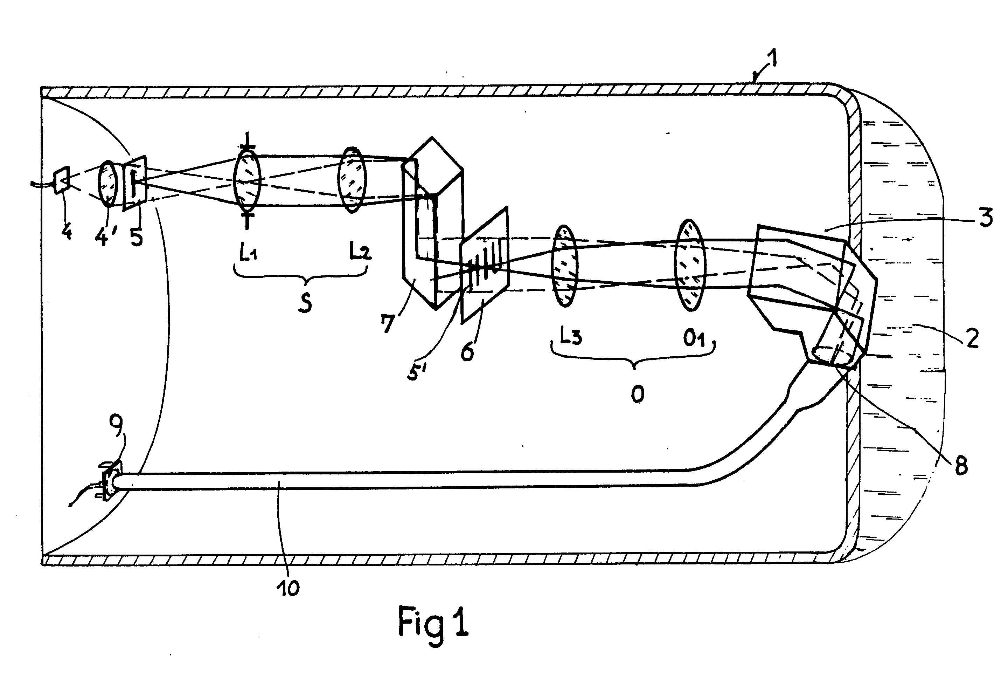

On se reportera tout d'abord à la figure 1 : la figure 1 représente, placé dans un boitier 1, un réfractomètre destiné à la mesure de l'indice de réfraction d'un milieu liquide 2. Ce réfractomètre comporte un prisme de référence 3 d'indice connu, par exemple en verre, ce prisme étant en contact direct avec le milieu 2.

Une source lumineuse 4 éclaire, par l'intermédiaire d'un condenseur 4', une fente-source 5 unique placée devant elle. La fente-source 5 a pour image par rapport à un système optique S l'une des fentes 5' d'une grille 6 fixe munie de fentes parallèles 5' régulièrement espacées.

Entre le système optique S et la grille 6 est situé un rhomboèdre 7 susceptible de tourner autour d'un axe parallèle à l'axe du pinceau issu de la fente-source 5. Ainsi, en tournant sur lui-même, le rhomboèdre 7 permet de déplacer l'image de la fente-source 5 sur la grille 6, cette image étant située successivement sur chacune des fentes 5' de la grille 6.

Le pinceau issu successivement de chacune des fentes 5' correspond à un angle d'incidence déterminé sur le prisme 3.

Un objectif O placé entre la grille et le prisme 3, focalise sur le prisme 3 les rayons lumineux issus des fentes 5' de la grille. L'objectif O a la grille à son foyer ; les rayons lumineux issus de 5' tombent donc parallèlement sur le prisme 3. La quantité de lumière sortant du prisme 3 peut être mesurée dès la sortie 8 du prisme. Une cellule de mesure 9 peut être placée immédiatement à la sortie 8 mais on a préféré, dans le mode de réalisation de la figure 1, placer la cellule 9 à l'extrémité d'une fibre optique 10 reliant le prisme 3 à la cellule 9, pour éloigner la cellule 9 du milieu 2 qui peut être porté à une température élevée. On a représenté ici la fibre optique 10 avec une section qui diminue lorsque l'on va du prisme 3 vers la cellule 9. En effet, comme on ne peut pas réduire la dimension de la face d'entrée 8 de la fibre 10 au-delà d'une certaine limite à cause d'un phénomène de diffraction par la fente 5, la diminution de la section de la fibre optique 10 permet d'utiliser une cellule 9 de petite taille et donc d'améliorer ses performances en bruit et en vitesse.

Comme on a représenté en traits pleins le trajet du pinceau lumineux issu de la fente 5, on a représenté en traits pointillés un pinceau lumineux issu de la source 4.

On peut voir ainsi que, dans le plan image de la source 4 par rapport au condenseur 4', on a placé une lentille $L_1$, qui constitue la pupille de l'appareil. Cette lentille $L_1$ constitue avec la lentille $L_2$ au foyer duquel elle se trouve le système S. Ainsi, la lentille $L_2$ rejetant la lentille $L_1$ à l'infini, la pupille est immobile lors du déplacement de l'image 5' de la fente 5 par le mouvement du rhomboèdre 7.

Quant à l'objectif O, il est constitué d'un verre de champ $L_3$, qui projette la pupille sur la sortie 8 du prisme 3, et de l'objectif $O_1$ de focalisation des rayons issus de la fente 5'.

On constate donc que l'image de la source 3 se trouve à la sortie 8 du prisme et donc sur la cellule 9. Cette position, pour laquelle la source et la cellule sont conjuguées est celle qui permet un éclairement maximal sur la cellule dont l'utilisation d'une lampe peu puissante. En particulier, la source 4 peut être constituée par une diode électroluminescente : on a ainsi une source monochromatique de longue durée de vie émettant une lumière modulée. On pourra prendre par exemple une diode électroluminescente jaune pour pouvoir utiliser les calculs connus concernant la raie du sodium. L'appareil selon l'invention permet donc l'utilisation d'une lampe peu puissante par exemple d'une diode électroluminescente monochromatique apportant une grande précision dans la mesure et ayant une longue durée de vie.

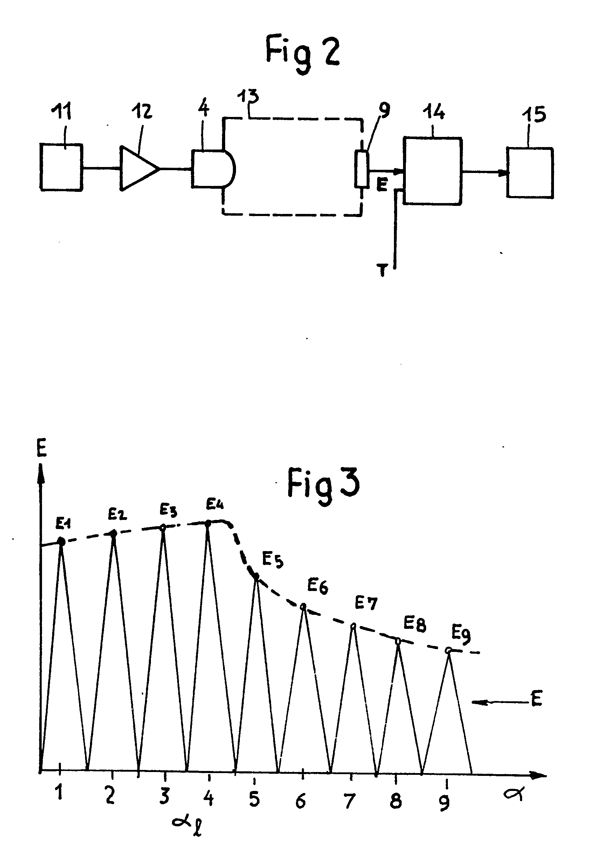

On a représenté sur la figure 2 le schéma électronique, qui complète le schéma optique, du réfractomètre selon l'invention.

Ce schéma comporte un oscillateur 11 et un préampli 12 en amont de la diode électroluminescente 4, le repère 4 correspondant à celui de la figure 1. Le repère 13 désigne l'optique du réfractomètre telle que représentée sur la figure 1, avec la cellule 9 à sa sortie. Le signal reçu par la cellule 9, c'est-à-dire l'éclairement E de cette cellule est représenté par la courbe E de la figure 3. Ce signal est numérisé à chaque passage par un maximum : le calculateur numérique 14, placé en aval de la cellule 9, reçoit simultanément des valeurs discrètes $E_1$, $E_2$, ..., de l'éclairement et l'angle $\alpha$ correspondant au numéro de ces valeurs (Fig. 3). Il sélectionne parmi ces valeurs celle qui se trouve la plus proche du point de cassure de la courbe des maxima de la courbe E. L'angle $\alpha_1$ correspondant au numéro de la valeur de l'éclairement sélectionnée donne l'angle limite recherché ; le calculateur 14 en déduit immédiatement par la loi des sinus l'indice de réfraction du milieu 2. Cet indice est corrigé par le calculateur 14 en fonction de la température T du milieu (T a été mesurée par un capteur adapté et a été introduite dans le calculateur 14, comme le montre la figure 2). L'indice est alors affiché en 15 (Fig. 2).

L'invention qui vient d'être décrite comporte de nombreux avantages. En particulier, elle permet l'utilisation d'une source peu puissante, par exemple d'une diode électroluminescente, ne présentant plus les inconvénients des sources utilisées dans les réfractomètres habituels mais présentant au contraire l'avantage de donner plus de précisions à l'appareil puisque la lumière est monochromatique.

Le réfractomètre selon l'invention a été conçu non seulement pour que l'image de la pupille se trouve sur la cellule mais aussi pour que la pupille soit rejetée à l'infini au niveau du rhomboèdre et de la grille ; ceci permet de déplacer la fente sur la grille sans affecter la pupille. En outre, une erreur dans le positionnement du rhomboèdre n'affecte pas la position de l'image de la fente sur la grille.

Tout en restant dans le cadre des revendications, on peut envisager d'autres modes de réalisation. Ainsi, on pourrait supprimer le rhomboèdre 7 et faire bouger la fente 5 dans une direction perpendiculaire à l'axe optique afin que la fente 5 ait pour image sur la grille 6 successivement chacune des fentes 5' de la grille 6.

**Revendications**

1. Réfractomètre destiné à la mesure de l'indice de réfraction d'un milieu, utilisant la méthode de l'angle limite, comprenant un prisme de référence (3), d'indice de réfraction connu, pouvant être mis en contact avec le milieu à étudier (2), une source lumineuse (4), un objectif de focalisation sur le prisme des rayons lumineux issus de la source, une cellule de mesure photoélectrique (9) située à la sortie du prisme et un dispositif d'interprétation des signaux reçus par la cellule (9), la source (4) éclairant une fente-source (5), caractérisé par le fait que cette fente-source (5) a pour image par rapport à un système optique (S) l'une des fentes d'une grille fixe (6) perpendiculaire à l'axe optique et percée de fentes (5') parallèles entre elles régulièrement espacées correspondant chacune à un angle d'incidence du faisceau optique sur le prisme (3) et que des moyens sont prévus pour que l'image (5') de la fente-source (5) sur la grille (6) puisse être successivement chacune des fentes (5') de la grille (6), une pupille (L$_1$), faisant partie du système optique (S) et située dans le plan image de la source, étant conjuguée avec la face (8) de sortie du prisme (3) et restant immobile lors du déplacement de l'image (5') de la fente-source (5) sur la grille (6).

2. Réfractomètre selon la revendication 1, caractérisé par le fait que la fente-source (5) est fixe et que le faisceau optique issu du système optique (S) est déplacé parallèlement à lui-même au moyen d'un rhomboèdre (7) tournant autour d'un axe parallèle à l'axe optique.

3. Réfractomètre selon l'une des revendications 1 ou 2, caractérisé par le fait que le système optique (S) est constitué de deux lentilles (L$_1$ et L$_2$), dont l'une (L$_1$) correspond à ladite pupille, cette pupille étant placée au foyer de l'autre lentille (L$_2$).

4. Réfractomètre selon l'une des revendications précédentes, caractérisé par le fait que la source (4) est constituée d'une diode électroluminescente.

5. Réfractomètre selon l'une des revendications précédentes, caractérisé par le fait qu'une fibre optique (10) est placée entre la face de sortie (8) du prisme (3) et la cellule de mesure (9).

6. Réfractomètre selon la revendication 5, caractérisé par le fait que la section de la fibre optique (10) diminue de la face de sortie (8) du prisme (3) à la cellule de mesure (9).

7. Réfractomètre selon l'une des revendications précédentes, caractérisé par le fait que le dispositif d'interprétation des signaux reçus par la cellule (9) est constitué d'un calculateur numérique (1).

## Claims

1. A refractometer intended for the measurement of the refractive index of a medium, employing the critical angle method, comprising a reference prism (3), of known refractive index, which can be placed in contact with the medium to be investigated (2), a light source (4), an objective for focusing on the prism the light rays coming from the source, a photoelectric measuring cell (9) situated at the exit of the prism and a device for interpreting the signals received by the cell (9), the source (4) illuminating a source-slit (5), characterised in that this source-slit (5) has as its image relative to an optical system (S) one of the slits of a fixed grid (6) which is perpendicular to the optical axis and is pierced with slits (5') which are parallel to each other and uniformly spaced, each one corresponding to an angle of incidence of the optical beam on the prism (3) and in that means are provided such that the image (5') of the source-slit (5) on the grid (6) can be, successively, each one of the slits (5') of the grid (6), a pupil (L$_1$), forming part of the optical system (S) and situated in the image plane of the source, being conjugated with the exit face (8) of the prism (3) and remaining stationary during the movement of the image (5') of the source-slit (5) on the grid (6).

2. A refractometer according to Claim 1, characterised in that the source-slit (5) is fixed and in that the optical beam coming from the optical system (S) is displaced in parallel to itself by means of a rhombohedron (7) rotating around an axis which is parallel to the optical axis.

3. A refractometer according to one of Claims 1 or 2, characterised in that the optical system (S) consists of two lenses (L$_1$ and L$_2$), one of which (L$_1$) corresponds to the said pupil, this pupil being placed at the focus of the other lens (L$_2$).

4. A refractometer according to one of the preceding claims, characterised in that the source (4) consists of an electroluminescent diode.

5. A refractometer according to one of the preceding claims, characterised in that an optical fibre (10) is placed between the exit face (8) of the prism (3) and the measuring cell (9).

6. A refractometer according to Claim 5, characterised in that the cross-section of the optical fibre (10) diminishes from the exit face (8) of the prism (3) to the measuring cell (9).

7. A refractometer according to one of the preceding claims, characterised in that the device for interpreting the signals received by the cell (9) consists of a digital calculator (1).

## Ansprüche

1. Refraktometer, das zur Messung des Brechungsindex eines Mediums unter Anwendung der Grenzwinkelmethode bestimmt ist, mit einem Bezugsprisma (3) von bekanntem Brechungsindex, das mit dem zu prüfenden Medium (2) in Berührung bringbar ist, mit einer Lichtquelle (4), einem Objektiv für die Fokussierung der von der Lichtquelle abgegebenen Strahlen auf dem Prisma, einer photoelektrischen Meßzelle (9), die vor der Austrittsöffnung des Prismas gelegen ist und einer Einrichtung zur Auswertung der von der Zelle (9) empfangenen Signale, wobei die Lichtquelle (4) einen Quellenspalt (5) beleuchtet, dadurch gekennzeichnet, daß der Quellenspalt (5) als Bild in bezug auf ein optisches System (S) einen der Spalte eines feststehenden Gitters (6) hat, das senkrecht zur optischen Achse steht und von Spalten (5') durchsetzt ist, die parallel in bezug aufeinander in regelmäßigen Abständen das Gitter durchsetzen und von welchen jeder einem Lichteinfallswinkel des optischen Strahlenbündels auf das Prisma (3) entspricht, daß eine Einrichtung (7) vorgesehen ist, mit der das Bild (5') des Quellenspaltes (5) auf dem Gitter (6) aufeinanderfolgend jedem der Spalte (5') des Gitters (6) entsprechen kann und daß ein Sehloch (L₁), das einen Bestandteil des optischen Systems bildet und in der Bildebene der Lichtquelle gelegen ist, mit der Ausgangsfläche (8) des Prismas (3) konjugiert ist und bei der Verschiebung des Bildes (5') des Quellenspaltes (5) auf dem Gitter (6) unbeweglich bleibt.

2. Refraktometer nach Anspruch 1, dadurch gekennzeichnet, daß der Quellenspalt (5) feststehend ist und daß das vom optischen System (S) abgegebene Strahlenbündel parallel zu sich selbst mittels eines Rhomboeders (7) verschiebbar ist, der um eine parallel in bezug auf die optische Achse verlaufende Achse drehbar ist.

3. Refraktometer nach einem der Ansprüche 1 und 2, dadurch gekennzeichnet, daß das optische System (S) von zwei Linsen (L₁ und L₂) gebildet ist, von welchen (L₁) dem Sehloch entspricht, wobei das Sehloch im Brennpunkt der anderen Linse (L₂) angeordnet ist.

4. Refraktometer nach einem der vorhergehenden Ansprüche, dadurch gekennzeichnet, daß die Lichtquelle (4) aus einer elektrolumineszenten Diode besteht.

5. Refraktometer nach einem der vorhergehenden Ansprüche, dadurch gekennzeichnet, daß eine Faseroptik (10) zwischen der Ausgangsfläche (8) des Prismas (3) und der Meßzelle (9) angeordnet ist.

6. Refraktometer nach Anspruch 5, dadurch gekennzeichnet, daß der Querschnitt der Faseroptik (10) von der Ausgangsfläche (8) des Prismas (3) zur Meßzelle (9) hin abnimmt.

7. Refraktometer nach einem der vorhergehenden Ansprüche, dadurch gekennzeichnet, daß die Einrichtung zur Auswertung der von der Zelle (9) aufgenommenen Signale aus einem numerischen bzw. digitalen Rechner (1) besteht.

Fig 1

# Fig 2

# Fig 3